(19) Europäisches Patentamt
European Patent Office
Office européen des brevets

(11) EP 4 541 498 A1

(12) EUROPEAN PATENT APPLICATION
published in accordance with Art. 153(4) EPC

(43) Date of publication:
23.04.2025 Bulletin 2025/17

(51) International Patent Classification (IPC):
B23K 9/127 (2006.01)    B25J 9/10 (2006.01)

(21) Application number: 23842668.8

(52) Cooperative Patent Classification (CPC):
B23K 9/127; B25J 9/10

(22) Date of filing: 12.05.2023

(86) International application number:
PCT/JP2023/018003

(87) International publication number:
WO 2024/018736 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.07.2022 JP 2022114754

(71) Applicant: KABUSHIKI KAISHA KOBE SEIKO
SHO (KOBE STEEL, LTD.)
Hyogo 651-8585 (JP)

(72) Inventor: SHINOZAKI, Takahiro
Nishi-ku, Kobe-shi, Hyogo 651-2271 (JP)

(74) Representative: Müller-Boré & Partner
Patentanwälte PartG mbB
Friedenheimer Brücke 21
80639 München (DE)

(54) ROBOT CONTROL METHOD, AND ROBOT CONTROL DEVICE

(57) A control method of a robot includes: acquiring coordinate information of a designated point provided in a movement path of a tip end of the welding torch when the robot is operated; specifying a deviation amount associated with a vertex of a lattice including the designated point from a database in which coordinates of a target position of the tip end of the welding torch and a deviation amount of an arm tip end from the target position are associated with each other; deriving a deviation amount of the tip end of the welding torch from the designated point when the robot is operated with the designated point as a target position based on the specified deviation amount and coordinates of the designated point and the vertex; and correcting a target position of the robot with respect to the designated point based on the deviation amount.

FIG. 1

EP 4 541 498 A1

**Description**

TECHNICAL FIELD

The present invention relates to a robot control method and a robot control device.

BACKGROUND ART

In the related art, an additively-manufactured object is manufactured by depositing weld beads using a robot. Further, when welding is performed automatically, an operator has previously taught a welding path and a welding posture. When additive manufacturing is performed, it is necessary to perform control in consideration of positional deviation caused by a posture, a structural error, or the like of a robot to improve manufacturing accuracy.

For example, Patent Literature 1 discloses that automatic correction is performed by detecting an angle of each axis of a robot when any one point in a space is taught in a plurality of postures, and calculating a setting error required to match a coordinate axis of a tool tip end taught in the plurality of postures.

CITATION LIST

PATENT LITERATURE

Patent Literature 1: JPS61-133409A

SUMMARY OF INVENTION

TECHNICAL PROBLEM

For example, in additive manufacturing using a welding wire, deviation may occur at a target position depending on performance of the robot to be used, a manufacturing error, and the like. This deviation may influence the shape and internal quality of a manufactured object. For example, when a path becomes longer in a large manufactured object or the like, the influence of the positional deviation also increases, and the final quality is also influenced. In particular, the additive manufacturing is characterized by the fact that the welding wire may be deposited in various postures, the length of each path may be very long, and the number of paths may easily become extremely large. Therefore, it is labor-intensive and unrealistic to perform teaching in advance for each path and correct the positional deviation each time. Further, since the positional deviation varies from robot to robot, it is necessary to perform corrections for each robot. In Patent Literature 1, individual teaching is necessary, and the labor cannot be reduced in the above case. Therefore, there is a demand for a method of automatically correcting the deviation of the target position for any point in a deposition plan related to the additive manufacturing.

In view of the above problems, an object of the present invention is to enable automatic correction of a positional deviation of a tip end of a welding torch of a robot from a target position.

SOLUTION TO PROBLEM

In order to solve the above problems, the present invention has the following configurations. That is, a control method of a robot including a welding torch at an arm tip end portion includes:

an acquisition step of acquiring coordinate information of a designated point provided in a movement path of a tip end of the welding torch when the robot is operated;
a specifying step of specifying information of a deviation amount associated with a vertex of a lattice including the designated point from a database in which coordinates of a target position of the tip end of the welding torch and a deviation amount of the tip end of the welding torch from the target position are associated with each other;
a derivation step of deriving a deviation amount of the tip end of the welding torch from the designated point when the robot is operated with the designated point as a target position based on the deviation amount specified in the specifying step and coordinates of the designated point and the vertex; and
a correction step of correcting a target position of the robot with respect to the designated point based on the deviation amount derived in the derivation step.

Another embodiment of the present invention has the following configuration. That is, a control device of a robot including a welding torch at an arm tip end portion includes:

a holding unit configured to hold a database in which coordinates of a target position of the tip of the welding torch and a deviation amount of the tip of the welding torch from the target position are associated with each other;

an acquisition unit configured to acquire coordinate information of a designated point provided in a movement path of a tip end of the welding torch when the robot is operated;

a specifying unit configured to specify information of a deviation amount associated with a vertex of a lattice including the designated point from the database;

a derivation unit configured to derive a deviation amount of the tip end of the welding torch from the designated point when the robot is operated with the designated point as a target position based on the deviation amount specified by the specifying unit and coordinates of the designated point and the vertex; and

a correction unit configured to correct a target position of the robot with respect to the designated point based on the deviation amount derived by the derivation unit.

ADVANTAGEOUS EFFECTS OF INVENTION

According to the present invention, it is possible to automatically correct the positional deviation of the tip end of the welding torch of the robot from the target position.

BRIEF DESCRIPTION OF DRAWINGS

FIG. 1 is a schematic configuration view showing a configuration example of an additive manufacturing system according to an embodiment of the present disclosure.

FIG. 2A is a schematic diagram showing a schematic view of a DB configuration for deriving a correction amount according to the embodiment of the present invention.

FIG. 2B is a table showing an example of the DB configuration for deriving the correction amount according to the embodiment of the present invention.

FIG. 3 is a conceptual diagram showing an example of derivation of the correction amount according to the embodiment of the present invention.

FIG. 4 is a flowchart of correction processing of a positional deviation according to the embodiment of the present invention.

FIG. 5A is a graph showing a derivation result of the correction amount according to the embodiment of the present invention.

FIG. 5B is a graph showing a derivation result of the correction amount according to the embodiment of the present invention.

FIG. 5C is a graph showing a derivation result of the correction amount according to the embodiment of the present invention.

FIG. 6A is a graph illustrating addition of designated points according to the embodiment of the present invention.

FIG. 6B is a graph illustrating addition of the designated points according to the embodiment of the present invention.

FIG. 7 is a graph illustrating changes in a deviation amount according to the embodiment of the present invention.

FIG. 8 is a graph illustrating changes in the deviation amount corresponding to a posture according to the embodiment of the present invention.

FIG. 9A is a graph illustrating changes in the deviation amount corresponding to the posture according to the embodiment of the present invention.

FIG. 9B is a graph illustrating changes in the deviation amount corresponding to the posture according to the embodiment of the present invention.

DESCRIPTION OF EMBODIMENTS

Hereinafter, embodiments of the present invention will be described with reference to the drawings. An embodiment described below is one embodiment for describing the present invention, and is not intended to be interpreted to limit the invention, and furthermore, not all configurations described in each embodiment are essential configurations for solving the problems of the invention. In the drawings, the same components are denoted by the same reference numerals, and a correspondence therebetween is shown.

<First Embodiment>

Hereinafter, a first embodiment of the present invention will be described. Here, an additive manufacturing system capable of performing additive manufacturing will be described as an example. However, the present invention is not limited thereto as long as essential parts of the present invention can be implemented.

[System Configuration]

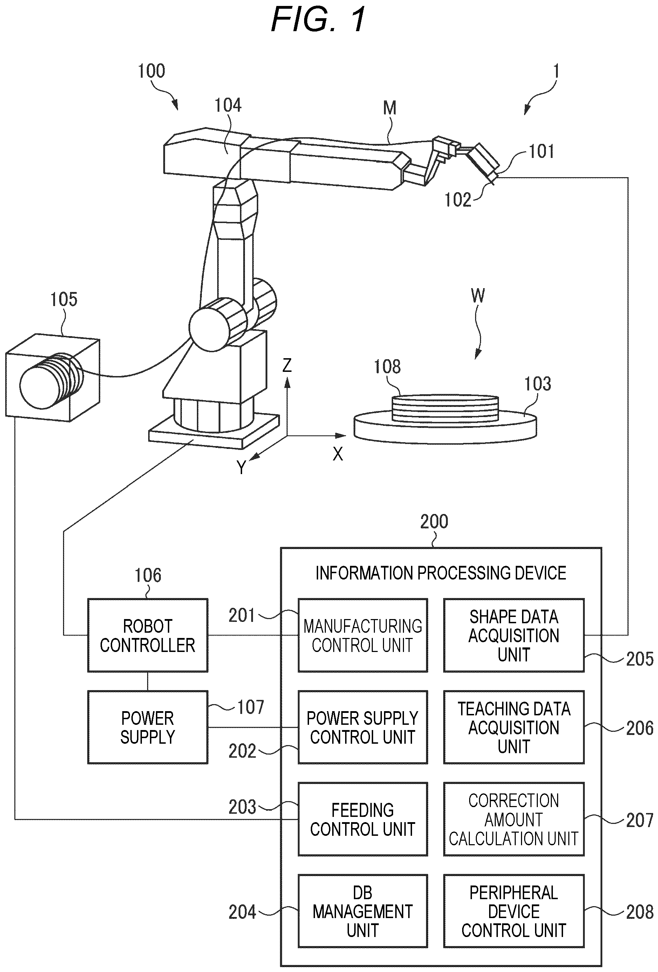

FIG. 1 is a schematic configuration view of the additive manufacturing system to which the present invention is applicable.

An additive manufacturing system 1 according to the present embodiment includes an additive manufacturing device 100 and an information processing device 200 that integrally controls the additive manufacturing device 100. FIG. 1 shows a three-dimensional coordinate system indicated by an X axis, a Y axis, and a Z axis. The origin position of the three-dimensional coordinate system is not particularly limited, but may be set at any position, and the additive manufacturing system 1 performs an additive manufacturing operation with the origin position as a reference.

The additive manufacturing device 100 includes a welding robot 104, a filler metal supply unit 105 that supplies a filler metal (welding wire) M to a torch 102, a robot controller 106 that controls the welding robot 104, and a power supply 107.

The welding robot 104 is an articulated robot, and at the torch 102 provided on a tip end shaft, the filler metal M is supported such that the filler metal M can be continuously fed. The torch 102 holds the filler metal M in a state of protruding from a tip end thereof. A position and posture of the torch 102 can be freely set three-dimensionally within a range of degrees of freedom of a robot arm constituting the welding robot 104.

The torch 102 includes a shield nozzle (not shown), and shielding gas is supplied from the shield nozzle. The shield gas blocks the atmosphere, prevents oxidation, nitridation, or the like of molten metal during welding, thereby reducing welding failures. An arc welding method used in the present embodiment may be a consumable electrode type such as shielded metal arc welding and carbon dioxide gas arc welding, or a non-consumable electrode type such as TIG welding and plasma arc welding, and is appropriately selected depending on an additively-manufactured object W to be manufactured.

A shape sensor 101 movable following movement of the torch 102 is provided in the vicinity of the torch 102. The shape sensor 101 detects a shape of the additively-manufactured object W formed on a base 103. In the present embodiment, it is assumed that a height, position, width, or the like of a weld bead 108 (also simply referred to as a "bead") constituting the additively-manufactured object W can be detected by the shape sensor 101. The information detected by the shape sensor 101 is transmitted to the information processing device 200. Note that the configuration of the shape sensor 101 is not particularly limited, and may be a configuration (contact sensor) detecting a shape from a contact, or a configuration (non-contact sensor) detecting a shape from a laser or the like. A means for deriving a shape of the formed bead is not limited to the shape sensor 101 installed in the vicinity of the torch 102. For example, the shape of the formed bead may be indirectly derived. As an example, a database (DB) showing a profile of a welding current and a feeding speed of the filler metal M and a height tendency of the bead may be predefined, and the height of the formed bead may be derived based on welding conditions during manufacturing.

In the welding robot 104, in the case where the arc welding method is the consumable electrode type, a contact tip is disposed inside the shield nozzle, and the filler metal M to which the melting current is supplied is held on the contact tip. While the filler metal M is held, the torch 102 generates an arc from the tip end of the filler metal M in a shielding gas atmosphere. The filler metal M is fed from the filler metal supply unit 105 to the torch 102 by a delivery mechanism (not shown) attached to the robot arm or the like. Then, when the filler metal M fed continuously is melted and solidified while the torch 102 is moved, the linear weld bead 108, which is a melt-solidified body of the filler metal M, is formed on the base 103. The additively-manufactured object W is manufactured by depositing the weld bead 108.

A heat source for melting the filler metal M is not limited to the above-described arc. For example, a heat source using another method such as a heating method using both an arc and a laser, a heating method using plasma, or a heating method using an electron beam or a laser may be used. In the case of heating by the electron beam or the laser, a heating amount can be controlled more finely to keep the weld bead 108 in a more proper state, thereby contributing to further improvement in quality of the additively-manufactured object W.

The robot controller 106 drives the welding robot 104 based on a predetermined drive program based on an instruction from the information processing device 200 to manufacture the additively-manufactured object W on the base 103. That is, the welding robot 104 moves the torch 102 while melting the filler metal M with the arc, based on a command from the robot controller 106. The power supply 107 is a welding power supply that supplies electric power required for welding to the robot controller 106. The power supply 107 can operate in a plurality of control modes, and can switch the electric power (a current, a voltage, or the like) when power supply is supplied to the robot controller 106 according to the control mode. The filler metal supply unit 105 controls the supply and the feeding speed of the filler metal M to the torch 102 of the welding robot 104 based on the instruction from the information processing device 200.

The information processing device 200 may be, for example, an information processing device such as a personal computer (PC). Each function shown in FIG. 1 may be implemented by a control unit (not shown) reading and executing a program of the function according to the present embodiment stored in a storage unit (not shown). The storage unit may include a random access memory (RAM) as a volatile storage region, a read only memory (ROM) as a non-volatile storage region, a hard disk drive (HDD), or the like. Further, as the control unit, a central processing unit (CPU), a graphical processing unit (GPU), general-purpose computing on graphics processing units (GPGPU), or the like may be used.

The information processing device 200 includes a manufacturing control unit 201, a power supply control unit 202, a feeding control unit 203, a DB management unit 204, a shape data acquisition unit 205, a teaching data acquisition unit 206, a correction amount calculation unit 207, and a peripheral device control unit 208. The manufacturing control unit 201 generates a control signal for the robot controller 106 at the time of manufacturing based on design data (for example, CAD and CAM data) of the additively-manufactured object W to be manufactured. Here, the control signal includes a movement trajectory of the torch 102 and a welding condition at the time of forming the weld bead 108 by the welding robot 104, the feeding speed of the filler metal M by the filler metal supply unit 105, or the like. A movement trajectory of the torch 102 is not limited to the trajectory of the torch 102 while the weld bead 108 is formed on the base 103, and includes, for example, the movement trajectory of the torch 102 to a start position where the weld bead 108 is formed.

The power supply control unit 202 controls power supply (control mode) to the robot controller 106 by the power supply 107. Depending on the control mode, current and voltage values, a current waveform (pulse), or the like when beads having the same shape are formed may be different. Further, the power supply control unit 202 appropriately acquires information of the current and voltage provided from the power supply 107 to the robot controller 106.

The feeding control unit 203 controls the feeding speed and feeding timing of the filler metal M by the filler metal supply unit 105. Here, the feeding control of the filler metal M includes not only payout (forward feeding) but also return (backward feeding) of the filler metal M. The DB management unit 204 manages a database (DB) according to the present embodiment. The DB according to the present embodiment includes a database in which a correction amount for correcting a positional deviation to be described later is defined. Details of the configuration of the DB will be described later. The shape data acquisition unit 205 acquires shape data of the weld bead 108 formed on the base 103 detected by the shape sensor 101.

The teaching data acquisition unit 206 acquires teaching data including parameters taught by an operator via, for example, a teaching pendant (not shown). The manufacturing control unit 201 can manufacture the additively-manufactured object W by controlling the welding robot 104 using the design data of the additively-manufactured object W and the teaching data. In the present embodiment, the pieces of data are collectively referred to as "deposition plan data". The data in the deposition plan data is not particularly limited. The correction amount calculation unit 207 calculates a correction amount for a positional deviation caused by a manufacturing error or the like of the welding robot 104, from the processing to be described later.

The peripheral device control unit 208 controls the operation of a peripheral device provided around the welding robot 104 provided in the additive manufacturing system 1. Although not shown in FIG. 1, examples of the peripheral device include a positioner for adjusting a position and posture of the base 103 on which the additively-manufactured object W is manufactured, and a slider capable of sliding the welding robot 104 in a predetermined direction. The welding robot 104 may perform the additive manufacturing operation in conjunction with the peripheral devices.

A coordinate system in the design data and a coordinate system of the welding robot 104 according to the present embodiment are associated with each other. It is assumed that any position is set as the origin, and three axes (X axis, Y axis, and Z axis) of the coordinate system are set to define a position in three dimensions.

The additive manufacturing system 1 having the above-described configuration melts the filler metal M while moving the torch 102 by the driving of the welding robot 104 in accordance with the movement trajectory of the torch 102 defined by the set design data, and supplies the melted filler metal M onto the base 103. Accordingly, the additively-manufactured object W in which a plurality of linear weld beads 108 are arranged side by side is manufactured on the upper surface of the base 103.

[Database]

In the present embodiment, a point (hereinafter, referred to as a "designated point") on a path (hereinafter, referred to as a "path") at the time of manufacturing is designated in the shape data for the additively-manufactured object W indicated by the design data. When a tip end portion of the torch 102 is disposed in order to perform manufacturing on the designated point, a positional deviation may occur due to the manufacturing error or the like of the welding robot 104. In order to derive the correction amount for correcting the positional deviation, a database (hereinafter, also referred to as a "robot error map") defining a correction amount for each coordinate or posture in the three-dimensional coordinate system is used in the present embodiment. The database is defined in advance, for example, based on an actual measurement value when the tip end portion of the torch 102 of the welding robot 104 is moved with respect to coordinates of a target.

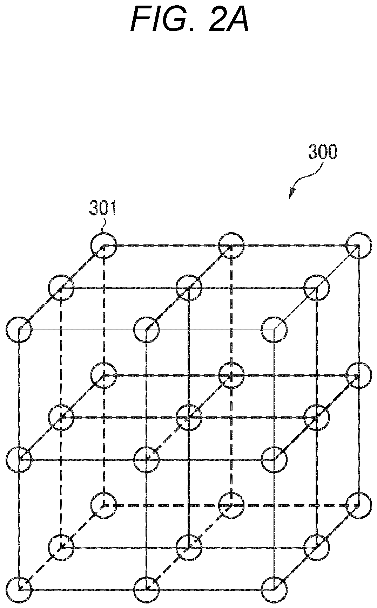

FIG. 2A is a diagram showing a conceptual configuration of the robot error map according to the present embodiment. As shown in FIG. 2A, in a robot error map 300, a correction amount is defined for each coordinate point 301 on a cell in a three-dimensional space. At this time, an interval between the coordinate points is not particularly limited. A unit cell that is a minimum unit of a lattice structure is not limited to a cubic shape of FIG. 2A, and may have another shape such as a triclinic lattice. Further, in the lattice structure, parameters are not necessarily defined for all lattice points, and parameters of some of the lattice points may not be defined. Processing when the designated point included in the path of the design data is coordinates other than the coordinate point defined in the robot error map 300 will be described later.

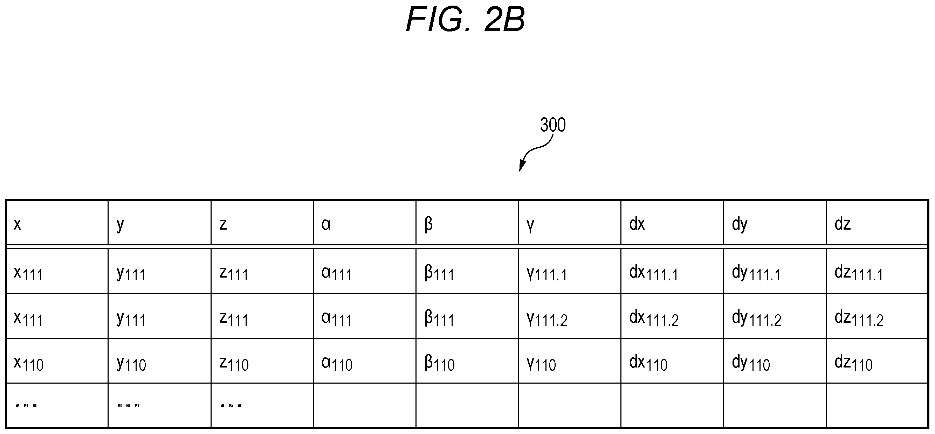

FIG. 2B is a table showing a configuration example of the robot error map 300 according to the present embodiment. In the present embodiment, coordinate information (x, y, z) indicating coordinates of the X axis, the Y axis, and the Z axis of the three-dimensional coordinate system and posture information ($\alpha$, $\beta$, $\gamma$) indicating rotation angles around the X axis, the Y axis, and the Z axis at a tip end portion (for example, the torch 102) of the welding robot 104 are used as parameters indicating the position and posture of the welding robot 104 at the time of manufacturing. The coordinate information is not limited to the above. For example, parameters (r, $\theta$, z) corresponding to a cylindrical coordinate system may be used.

Further, dx, dy, and dz represent correction amounts of the X axis, the Y axis, and the Z axis, respectively. In other words, the correction is performed assuming that the positional deviation occurs by the correction amounts shown here. In FIG. 2B, the correction amount (dx, dy, dz) is defined corresponding to (x, y, z, $\alpha$, $\beta$, $\gamma$). For example, ($x_{111}$, $y_{111}$, $z_{111}$, $\alpha_{111}$, $\beta_{111}$, $\gamma_{111.1}$) = ($dx_{111.1}$, $dy_{111.1}$, $dz_{111.1}$) is defined. A subscript for each parameter is shown to uniquely identify a location in the lattice point shown in FIG. 2A. In the example of FIG. 2A, 27 lattice points (that is, coordinate points) are present, and are set to be identified at positions of the three axes. Further, since the positional deviation may vary depending on the posture at the same coordinate point, for convenience, a difference in the posture is indicated by decimal places of the subscripts (.1, .2, ).

The correction amount defined in the robot error map 300 is not limited to a deviation amount between a target position designated by the control of the welding robot 104 and a tip end position of the torch 102. For example, the correction amount may be a deviation amount between a trajectory (for example, a straight line) geometrically connecting a plurality of target positions designated by the control and a trajectory through which a tip end of the torch 102 actually passes. The robot error map for the correction amounts may be defined separately. The target position of the designated point designated by the deposition plan data may be derived by referring to the former, and a region connecting the designated points may be derived by referring to the latter.

The robot error map 300 according to the present embodiment may be appropriately updated, and the update method is not particularly limited. The robot error map 300 may be updated at a timing at which the configuration of the welding robot 104 changes or a certain driving time elapses.

Next, a derivation method of a correction amount for the designated point in coordinates not defined in the robot error map 300 will be described. First, when the designated point matches the coordinate point defined in the robot error map 300, the value of the robot error map 300 can be used as the correction amount for the designated point. On the other hand, when the designated point does not match any of the coordinate points not defined in the robot error map 300, the correction amount is derived from the correction amounts of the coordinate point positioned at a periphery of the designated point.

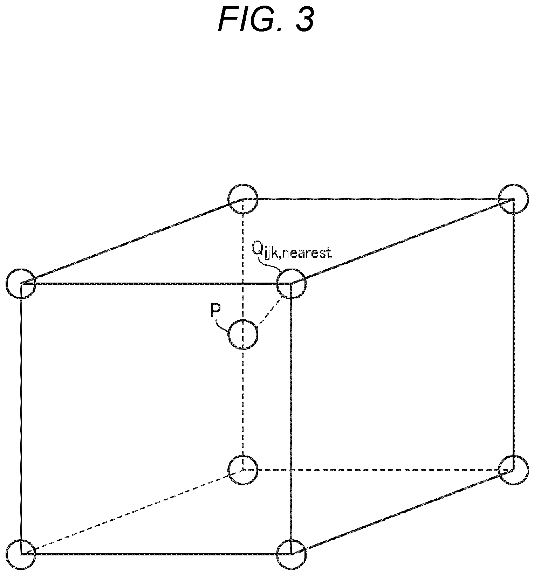

FIG. 3 is a conceptual diagram illustrating the derivation method of the correction amount according to the present embodiment. Here, a designated point P corresponding to the coordinate where the correction amount is not defined in the robot error map 300 will be described as an example. Parameters of the designated point P is (x, y, z, $\alpha$, $\beta$, $\gamma$). First, among the coordinate points defined in the robot error map 300, a coordinate point (hereinafter, referred to as a "closest point") at a position closest to the designated point P is specified. Here, it is assumed that the closest point is a coordinate point $Q_{ijk,\ nearest}$.

Correction amounts defined for the coordinate point $Q_{ijk,\ nearest}$ are acquired from the robot error map 300. Here, $dx(x_{ijk}, y_{ijk}, z_{ijk}, \alpha_{ijk}, \beta_{ijk}, \gamma_{ijk})$, $dy(x_{ijk}, y_{ijk}, z_{ijk}, \alpha_{ijk}, \beta_{ijk}, \gamma_{ijk})$, $dz(x_{ijk}, y_{ijk}, z_{ijk}, \alpha_{ijk}, \beta_{ijk}, \gamma_{ijk})$ are acquired as the correction amounts of the X axis, the Y axis, and the Z axis corresponding to the coordinate point $Q_{ijk,\ nearest}$, respectively. At this time, when a distance between the designated point P and the coordinate point $Q_{ijk,\ nearest}$ is shorter than a predetermined threshold, the same value as the correction amount defined for the coordinate point $Q_{ijk,\ nearest}$ is used as the correction amount of the designated point P. The predetermined threshold for the distance between the points may be defined in advance.

When a posture condition $\theta_q$ of the coordinate point $Q_{ijk,\ nearest}$ acquired from the robot error map 300 is different from a posture condition $\theta_p$ set for the designated point P, interpolation is performed to correspond to the posture condition $\theta_p$. For example, it is assumed that $\theta_p = (\alpha, \beta, \gamma)$, $\theta_q = (\alpha u, \beta v, \gamma w)$, $\alpha = \alpha u$, $\beta = \beta v$, and $\gamma \neq \gamma w$. When linear interpolation is performed for $\gamma$, a correction amount d can be derived using the following Formula (1).

$$D_{ijk}(\gamma) = (1 - t)d_{ijk}(\gamma_{w1}) + td_{ijk}(\gamma_{w2}) \cdots (1)$$

in which $0 < t < 1$, $\gamma_{w1} \neq \gamma_{w2}$, and $\gamma_{w1} < \gamma < \gamma_{w2}$.

Similarly, the interpolation may be performed using bilinear interpolation ($\alpha = \alpha i$, $\beta \neq \beta i$, and $\gamma \neq \gamma i$) or element interpolation ($\alpha \neq \alpha i$, $\beta \neq \beta i$, $\gamma \neq \gamma i$). This method is well known, and a detailed description thereof is omitted here. The interpolation method is not limited to the linear interpolation, and may be determined by defining a nonlinear function such as Lagrange interpolation.

On the other hand, when the distance between the designated point P and the coordinate point $Q_{ijk, nearest}$ which is the closest point is equal to or greater than the predetermined threshold, in the present embodiment, a new correction amount is derived. In the present embodiment, the correction amount corresponding to the designated point P is derived by the interpolation based on correction amounts for a plurality of coordinate points $Q_{ijk}$ positioned at a periphery of the designated point P. Here, the plurality of coordinate points $Q_{ijk}$ may include the coordinate point $Q_{ijk, nearest}$ which is the closest point, and for example, eight coordinate points of the unit cell shown in FIG. 3 may be used. Since an interval between the designated point and a vertex on the lattice is very close, it is possible to derive a correction amount that closely matches an actual deviation amount. The plurality of coordinate points of interest here may be coordinate points at other positions. For example, a coordinate point on a lattice larger than the unit cell may be referred to when there is a deviation in an information amount such as lack of information of the deviation amount at four points on the bottom surface among the coordinate points on the unit cell, and a total of six coordinate points including front, rear, left, right, directly upper, and directly lower coordinate points as viewed from the center point of the lattice of FIG. 2A. Further, a plurality of coordinate points included in a range of a sphere having a predetermined radius R may be used around the designated point P.

As described above, in the present embodiment, the vertexes of the lattice including the designated point are selected in the lattice structure. The number and positions of the coordinate points to be selected from a positional relationship between the designated point and the coordinate points in the vicinity thereof may be defined.

When the posture condition $\theta_p$ at the designated point P and the posture condition $\theta_q$ of $Q_{ijk}$ are different from each other, the interpolation is performed to correspond to the posture condition $\theta_p$ in the same procedure as in the case of $Q_{ijk, nearest}$.

A calculation method in this case may be, for example, the least squares method. First, the following Formulae (2) to (5) are defined based on information of the coordinate point $Q_{ijk}$ for a correction amount dx in the x-axis direction. Then, a coefficient w is obtained from Formula (6) using the least squares method, and a correction amount in the x-axis direction at the designated point P, that is, a deviation amount b, is calculated.

[Math. 1]

$$A = \begin{pmatrix} x_{111} & y_{111} & z_{111} & 1 \\ \vdots & \vdots & \vdots & \vdots \\ x_{ijk} & y_{ijk} & z_{ijk} & 1 \end{pmatrix} \quad \cdots \quad (2)$$

[Math. 2]

$$w = \begin{pmatrix} w_x \\ w_y \\ w_z \\ w_0 \end{pmatrix} \quad \cdots \quad (3)$$

[Math. 3]

$$b = \begin{pmatrix} dx_{111} \\ \vdots \\ dx_{ijk} \end{pmatrix} \quad \cdots \quad (4)$$

[Math. 4]

$$b = Aw \quad \cdots \quad (5)$$

[Math. 5]

$$w = (A^t A)^{-1} A^t b \quad \cdot \cdot \cdot \quad (6)$$

The above formula is for determining the deviation amount in the X-axis direction, but the calculation can be performed for the Y-axis direction and the Z-axis direction in a similar way.

[Processing Flow]

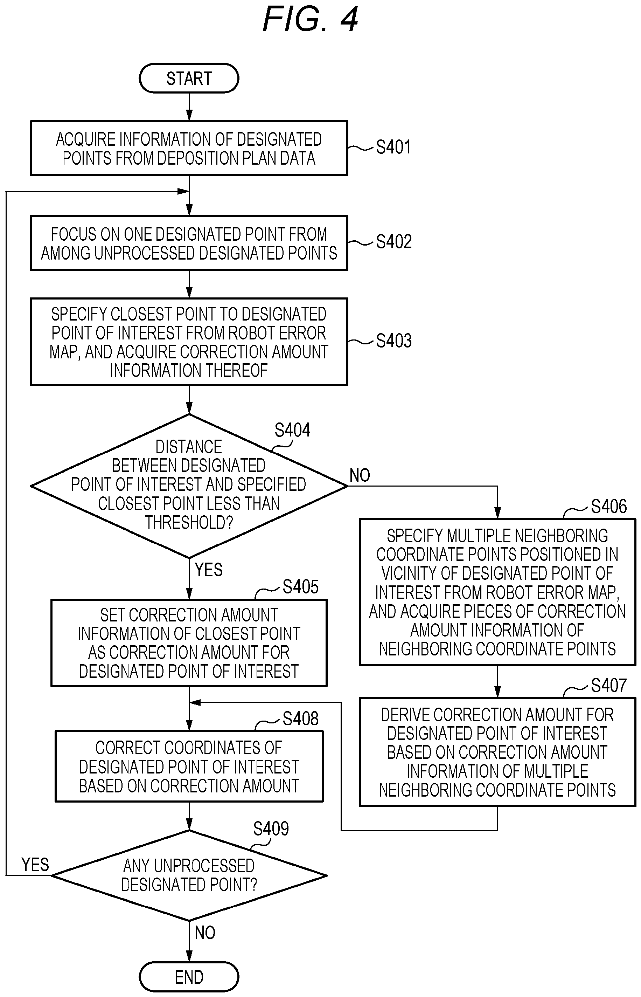

FIG. 4 is a flowchart of correction processing of the positional deviation for the designated point according to the present embodiment. The processing flow is executed by the information processing device 200. For example, a processing unit such as a CPU included in the information processing device 200 may be implemented by reading a program for implementing each part shown in FIG. 1 from the storage unit (not shown) and executing the program. Further, it is assumed that the robot error map 300 is defined before the processing flow is executed, and the deposition plan data for additive manufacturing is prepared. The processing flow may be performed in advance before the operation of the additive manufacturing is started, or may be performed parallel to the operation of the additive manufacturing.

In S401, the information processing device 200 acquires information related to a movement path for manufacturing from the deposition plan data. The movement path is composed of a plurality of designated points, and pieces of information of the plurality of designated points are acquired.

In S402, the information processing device 200 focuses on one designated point from among the designated points acquired in S401 (hereinafter, referred to as a "designated point of interest") and acquires parameters related to the additive manufacturing. The parameters here are six parameters (x, y, z, $\alpha$, $\beta$, $\gamma$) as described above.

In S403, the information processing device 200 specifies the closest point that is closest in distance to the designated point of interest from the robot error map 300 defined in advance, and acquires correction amount information thereof. Here, the correction amount information is three parameters dx, dy, and dz which are correction amounts of the X axis, the Y axis, and the Z axis, respectively. As described above, the coordinates of the designated point of interest and the coordinates of the closest point may match.

In S404, the information processing device 200 determines whether a distance between the designated point of interest and the closest point is less than a predetermined threshold. The predetermined threshold here may be defined in advance. When the distance between the designated point of interest and the closest point is less than the predetermined threshold (YES in S404), the processing of the information processing device 200 proceeds to S405. On the other hand, when the distance between the designated point of interest and the closest point is equal to or greater than the predetermined threshold (NO in S404), the processing of the information processing device 200 proceeds to S406.

In S405, the information processing device 200 sets the correction amount information of the closest point acquired in S403 as the correction amount for the designated point of interest. Then, the processing of the information processing device 200 proceeds to S408.

In step S406, the information processing device 200 specifies a plurality of neighboring coordinate points positioned in the vicinity of the designated point of interest from the robot error map 300, and acquires pieces of correction amount information of the neighboring coordinate points. The plurality of neighboring coordinate points may be, for example, the eight neighboring coordinate points shown in FIG. 3. When there is a neighboring coordinate point where a parameter is not defined at a plurality of neighboring coordinate points, a parameter of another neighboring coordinate point may be used in place of the neighboring coordinate point. Alternatively, the remaining neighboring coordinate points, that is, in the above example, seven neighboring coordinate points, may be used.

In S407, the information processing device 200 derives the correction amount for the designated point of interest based on the correction amount information of the plurality of neighboring coordinate points acquired in S406. The derivation method here may be derived based on the least squares method as described above. After deriving the correction amount, the processing of the information processing device 200 proceeds to S408.

In step S408, the information processing device 200 corrects the coordinates of the designated point of interest, that is, the target position of the torch 102, using the correction amount acquired in step S405 or S407.

In S409, the information processing device 200 determines whether there is an unprocessed designated point among the designated points acquired in S401. When there is an unprocessed designated point (YES in S409), the processing of the information processing device 200 returns to S402 and repeats the processing. On the other hand, when there is no unprocessed designated point (NO in S409), the processing flow ends.

The designated point to be processed in the flowchart may be performed on all the designated points of the movement path indicated by the deposition plan data, or may be performed only on some of the designated points included in the movement path. The correction may be performed on any one of the values on the X axis, the Y axis, and the Z axis.

[Control Example]

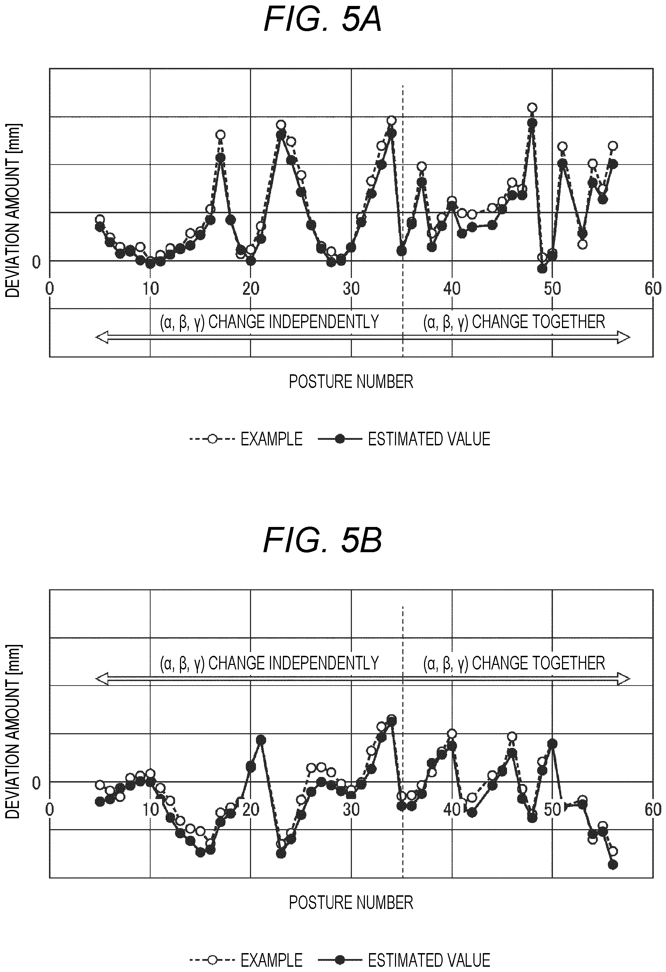

FIGS. 5A to 5C are diagrams showing an example in which the correction amount (estimated value) obtained by the method according to the present embodiment and the actual measurement value obtained by actually measuring the positional deviation of the tip end of the torch 102 are compared for the designated point, that is, the target position. The case where the correction amount can be accurately estimated means that the generated positional deviation can be appropriately corrected. In FIGS. 5A to 5C, a vertical axis indicates a deviation amount [mm], and a horizontal axis indicates individual designated points. An interval between the designated points is 100 mm. In FIGS. 5A to 5C, a left side of a broken line indicates a value when any one of the parameters of $\alpha$, $\beta$, and $\gamma$, which are posture information, has changed. A right side of the broken line indicates a value when a plurality of the parameters of $\alpha$, $\beta$, and $\gamma$, which are posture information, have changed.

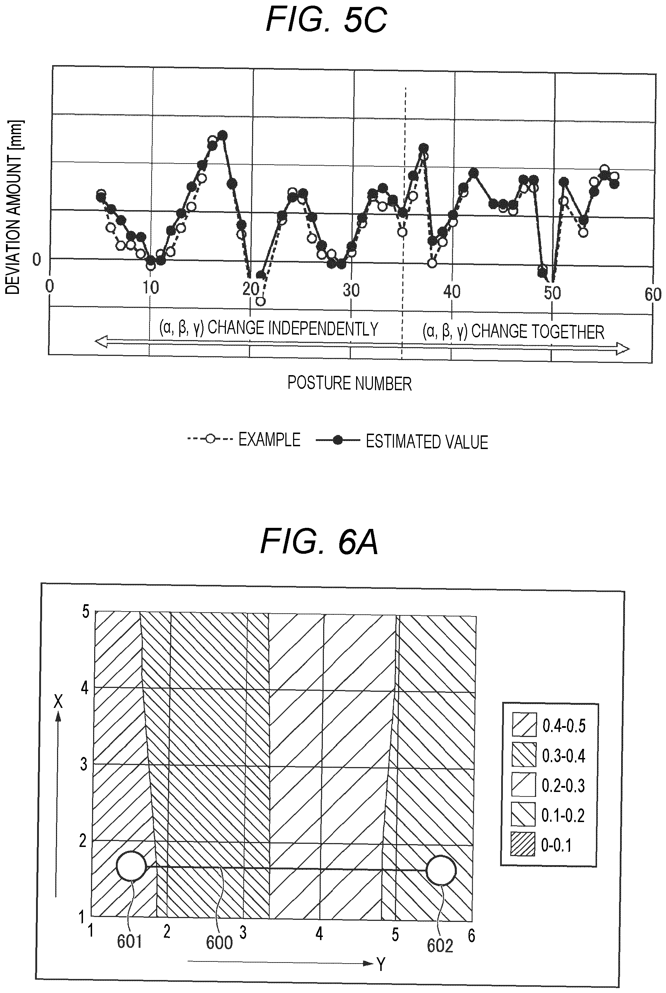

FIG. 5A is a diagram showing an estimated value and a result of the actual measurement value in the X-axis direction. FIG. 5B is a diagram showing an estimated value and a result of the actual measurement value in the Y-axis direction. FIG. 5C is a diagram showing an estimated value and a result of the actual measurement value in the Z-axis direction. As shown in FIGS. 5A to 5C, the deviation amount (that is, the correction amount) can be estimated to be close to the actual measurement value in any axial direction.

As described above, according to the present embodiment, it is possible to automatically correct the positional deviation of the tip end of the welding torch of the robot from the target position. At this time, it is possible to correct the positional deviation with high accuracy for the coordinates not included in the robot error map defined in advance, and it is possible to reduce the labor of the operator.

[Modification 1]

A modification of the present embodiment will be described. A case where the torch 102 is moved along the movement path designated by the deposition plan data will be considered. At this time, the deviation amount may vary for each position in the movement path. FIG. 6A is a diagram illustrating a change in the deviation amount in the movement path 600, wherein a vertical axis indicates the X-axis direction, and a horizontal axis indicates the Y-axis direction. Hatching in FIG. 6A indicates the deviation amount in an XY plane. For example, it is assumed that there is a movement path 600 and a designated point 601 and a designated point 602 are included.

The movement path 600 spans four regions having different deviation amounts. Further, the deviation amount at the designated point 601 is different from that at the designated point 602. Here, even when the respective deviation amounts are corrected for the designated point 601 and the designated point 602 are corrected, the deviation amounts at an intermediate portion are different from each other, and thus it is conceivable that the accuracy of the intermediate portion may deviate from the path specified in the deposition plan data.

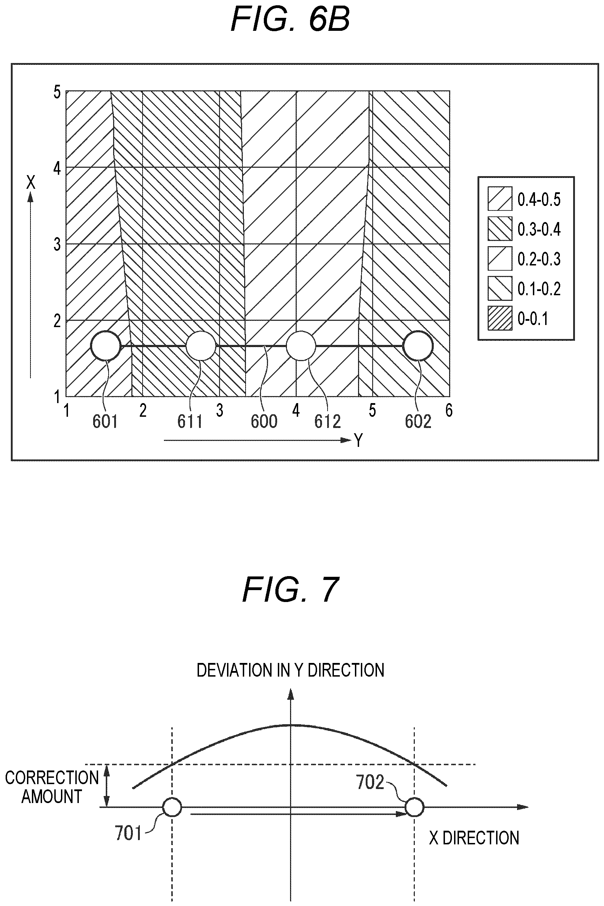

As shown in FIG. 6B, new designated points are added to the movement path. **In** the example of FIG. 6B, two designated points 611 and 612 are added. By adding the designated points and treating the designated points as correction targets, the entire movement trajectory can be corrected with higher accuracy. A determination of whether to add the designated points may be performed by, for example, comparing the number of regions spanned by the movement path with the number of designated points included in the movement path when a plurality of regions having different deviation amounts are divided as shown in FIG. 6A, and adding the designated points when the number of regions spanned by the movement path is larger. When the region is divided according to the deviation amount, the division is not limited to the example shown in FIG. 6A, and may be performed in a finer classification.

FIG. 7 is a graph illustrating distribution of the positional deviation in another representation of FIG. 6A. FIG. 7 is a diagram showing a deviation amount in the Y-axis direction when the torch 102 is moved in a movement path along the X-axis direction from a designated point 701 to a designated point 702 in a certain posture of the welding robot 104. Even when the deviation amount is specified based on coordinates of the designated point 701 and the designated point 702 and the correction is performed, a positional deviation (trajectory error) may occur in an intermediate portion between the coordinates of the designated point 701 and the designated point 702. Therefore, it is not limited to correcting the positional deviation for a certain designated point based on the deviation amount of the certain designated point, but the correction amount for the entire path may be determined from the deviation amounts estimated for the plurality of designated points included in the movement path.

[Modification 2]

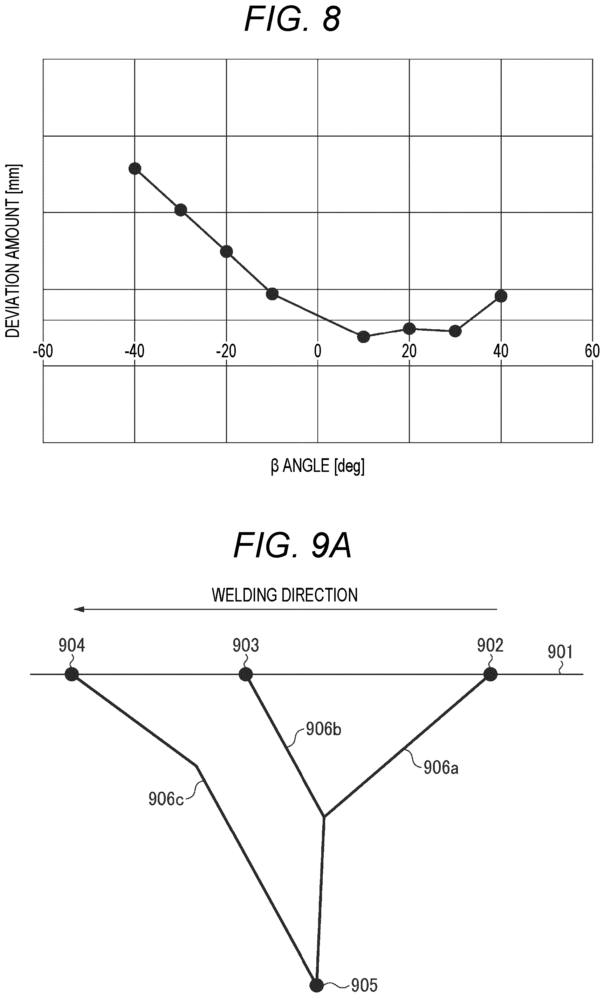

FIG. 8 is a diagram showing a change in the deviation amount occurring when $\beta$, which is one of the parameters of the posture of the welding robot 104, is switched for the same target position. In FIG. 8, a vertical axis indicates the deviation amount, and a horizontal axis indicates a value of $\beta$. According to the example of FIG. 8, when the value of $\beta$ is zero, the deviation amount can be made substantially zero. That is, even at the same target position, the positional deviation may be suppressed by changing the posture.

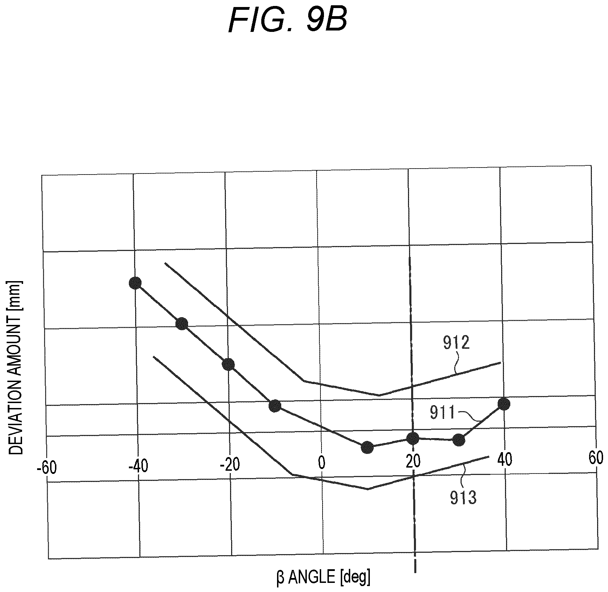

FIGS. 9A and 9B are diagrams showing changes in the deviation amount of each posture of the welding robot 104. FIG. 9A shows an example in which three designated points 902, 903, and 904 are included in a movement path 901. The diagram also shows an outline of the welding robot 104 performing additive manufacturing while switching between three postures 906a, 906b, and 906c with a starting point 905 as a reference. Here, it is assumed that the welding robot 104 sets the designated point 902 as the target position in the posture 906a, sets the designated point 903 as the target position in the posture 906b, and sets the designated point 904 as the target position in the posture 906c.

In FIG. 9B, the deviation amount in the case of the posture 906a corresponds to a graph 912 in FIG. 9B. The deviation amount in the case of the posture 906b corresponds to the graph 911 in FIG. 9B. The deviation amount in the case of the posture 906c corresponds to the graph 913 in FIG. 9B. That is, the deviation amount caused by the posture (here, the parameter $\beta$) is different. In the example of FIG. 9B, if the manufacturing can be performed while switching the value of $\beta$ in a state in which the posture 906b is maintained, it is possible to suppress the deviation amount and perform the manufacturing with high accuracy. Assuming this case, the welding robot 104 may be provided with a slider or the like for enabling movement while maintaining the posture. Accordingly, the information processing device 200 can improve the accuracy of the manufacturing by moving the start point 905 with a slider or the like in a state where the welding robot 104 is fixed at the posture 906b.

[Modification 3]

In the above configuration, the correction amount was calculated using the least squares method as shown in Formulae (2) to (6). Alternatively, the correction amount for the designated point P may be derived using a trained model obtained by machine learning. In this case, the trained model may be generated and used by repeating training processing in which each parameter of an A matrix is used as an input and each parameter of a b matrix (that is, a correction amount) is used as an output among the parameters of Formulae (2) to (6). Input data (parameters) used in the training may be part or all of the coordinate information and the posture information of the welding robot 104. Alternatively, the trained model may be generated and used by repeating training processing in which the coordinate information and the posture information of the designated point and various parameters of the lattice point specified from the robot error map 300 are input and the deviation amount is output. The machine learning here uses, for example, a technique of deep learning according to a natural network, and describes supervised learning as an example. A specific method (algorithm) of the deep learning is not particularly limited. For example, a known method such as a convolutional neural network (CNN) may be used. It should be noted that data obtained by interpolating posture information may be used as training data. In this way, the amount of training data can be increased, and accuracy of predicting the deviation amount for a designated point can be improved.

The training processing is not necessarily executed by the information processing device 200. For example, the information processing device 200 may be configured to provide training data for a training server (not shown) provided outside the information processing device 200 and perform the training processing on the server side. If necessary, the server may provide the trained model to the information processing device 200. The training server may be positioned on a network (not shown) such as the Internet, and the training server and the information processing device 200 are communicably connected to each other. That is, the information processing device 200 may operate as a machine learning device, or an external device may operate as the machine learning device.

<Other Embodiments>

In the present invention, a program or an application for implementing the functions of the one or more embodiments described above may be supplied to a system or an apparatus using a network, a storage medium, or the like, and one or more processors in a computer of the system or the apparatus may read and execute the program, thereby implementing the present invention.

Further, the present invention may also be implemented by a circuit that implements one or more functions (for example, an application specific integrated circuit (ASIC) and a field programmable gate array (FPGA)).

As described above, the present specification discloses the following matters.

(1) A control method of a robot including a welding torch at an arm tip end portion includes:

an acquisition step of acquiring coordinate information of a designated point provided in a movement path of a tip end of the welding torch when the robot is operated;
a specifying step of specifying information of a deviation amount associated with a vertex of a lattice including the designated point from a database in which coordinates of a target position of the tip end of the welding torch and a deviation amount of the tip end of the welding torch from the target position are associated with each other;

a derivation step of deriving a deviation amount of the tip end of the welding torch from the designated point when the robot is operated with the designated point as a target position based on the deviation amount specified in the specifying step and coordinates of the designated point and the vertex; and

a correction step of correcting a target position of the robot with respect to the designated point based on the deviation amount derived in the derivation step.

Accordingly, it is possible to automatically correct positional deviation of the tip end of the welding torch of the robot from the target position. At this time, it is possible to correct the positional deviation with high accuracy for the coordinates not included in the robot error map defined in advance, and it is possible to reduce the labor of the operator.

(2) The control method according to the above (1), in which

in the specifying step, information of deviation amounts associated with a plurality of the vertexes is specified, and in the derivation step, the deviation amount is derived by interpolation of the deviation amounts associated with the plurality of vertexes.

Accordingly, it is possible to correct the positional deviation with high accuracy even for coordinates not registered in the database.

(3) The control method according to the above (1), in which in the database, a parameter of an inclined posture of the welding torch is further associated.

Accordingly, it possible to correct the positional deviation in consideration of a plurality of postures that the robot can take for the target position. **In** particular, it is possible to directly reflect the tendency of the target positional deviation based on the inclined posture of the welding torch such as a posture with a large deviation amount or with a small posture.

(4) The control method according to the above (3), in which

in the acquisition step, posture information corresponding to the designated point is further acquired, and in the derivation step, the deviation amount is derived by performing interpolation based on a difference between the posture information corresponding to the designated point and a parameter of a posture indicated by the information of the deviation amount associated with the vertex specified in the specifying step.

Accordingly, even if the positional deviation occurs in a posture that is not registered in the database, it is possible to estimate the positional deviation based on the parameter of the registered posture.

(5) The control method according to the above (1), in which

in the acquisition step, posture information corresponding to the designated point is further acquired, and in the derivation step, an output obtained by inputting the coordinate information and the posture information of the designated point into a trained model is derived as a deviation amount from the designated point, the trained model being generated by performing learning with coordinate information of the vertex and posture information of the robot in the vertex as inputs and a deviation amount with respect to the vertex as an output.

Accordingly, the positional deviation can be estimated using the trained model obtained by machine learning, and it is unnecessary to use a complicated mathematical model. Further, since the trained model learns both the coordinate information and the posture information in advance, it is unnecessary to perform posture interpolation or coordinate interpolation step by step, and the deviation amount can be derived in a form in which the influence of the posture and the coordinates is collectively taken into consideration.

(6) The control method according to the above (1) further includes: an addition step of adding a new designated point in the movement path acquired in the acquisition step.

Accordingly, it possible to suppress the positional deviation on the movement path and improve the quality of the manufactured object.

(7) The control method according to the above (1), in which in the correction step, a target position of the robot with respect to the movement path when the robot is operated along the movement path is corrected based on a deviation amount with respect to a plurality of the designated points provided in the movement path.

Accordingly, the positional deviation of the robot with respect to the movement path including the plurality of designated points can be corrected based on the positional deviation for the plurality of designated points.

(8) A control device of a robot including a welding torch at an arm tip end portion includes:

a holding unit configured to hold a database in which coordinates of a target position of the tip of the welding torch and a deviation amount of the tip of the welding torch from the target position are associated with each other;

an acquisition unit configured to acquire coordinate information of a designated point provided in a movement path of a tip end of the welding torch when the robot is operated;

a specifying unit configured to specify information of a deviation amount associated with a vertex of a lattice including the designated point from the database;

a derivation unit configured to derive a deviation amount of the tip end of the welding torch from the designated point when the robot is operated with the designated point as a target position based on the deviation amount specified by the specifying unit and coordinates of the designated point and the vertex; and

a correction unit configured to correct a target position of the robot with respect to the designated point based on the deviation amount derived by the derivation unit.

Accordingly, it is possible to automatically correct positional deviation of the tip end of the welding torch of the robot from the target position. At this time, it is possible to correct the positional deviation with high accuracy for the coordinates not included in the robot error map defined in advance, and it is possible to reduce the labor of the operator.

Although various embodiments are described above, it is needless to say that the present invention is not limited to these embodiments. It is apparent that those skilled in the art can conceive of various modifications and alterations within the scope described in the claims, and it is understood that such modifications and alterations naturally fall within the technical scope of the present invention. In addition, the respective constituent elements in the above-described embodiments may be freely combined without departing from the gist of the invention.

The present application is based on a Japanese Patent Application (Patent Application No. 2022-114754) filed on July 19, 2022, the contents of which are incorporated herein by reference.

REFERENCE SIGNS LIST

1 additive manufacturing system
100 additive manufacturing device
101 shape sensor
102 torch
103 base
104 welding robot
106 robot controller
107 power supply
108 weld bead
200 information processing device
201 manufacturing control unit
202 power supply control unit
203 feeding control unit
204 DB (database) management unit
205 shape data acquisition unit
206 teaching data acquisition unit
207 correction amount calculation unit
208 peripheral device control unit
W additively-manufactured object
M filler metal

## Claims

1. A control method of a robot including a welding torch at an arm tip end portion, the method comprising:

   an acquisition step of acquiring coordinate information of a designated point provided in a movement path of a tip end of the welding torch in a case where the robot is operated;

   a specifying step of specifying information of a deviation amount associated with a vertex of a lattice including the designated point from a database in which coordinates of a target position of the tip end of the welding torch and a deviation amount of the tip end of the welding torch from the target position are associated with each other;

a derivation step of deriving a deviation amount of the tip end of the welding torch from the designated point in a case where the robot is operated with the designated point as a target position based on the deviation amount specified in the specifying step and coordinates of the designated point and the vertex; and

a correction step of correcting a target position of the robot with respect to the designated point based on the deviation amount derived in the derivation step.

2. The control method according to claim 1, wherein

in the specifying step, information of deviation amounts associated with a plurality of the vertexes is specified, and

in the derivation step, the deviation amount is derived by interpolation of the deviation amounts associated with the plurality of vertexes.

3. The control method according to claim 1, wherein
in the database, a parameter of an inclined posture of the welding torch is further associated.

4. The control method according to claim 3, wherein

in the acquisition step, posture information corresponding to the designated point is further acquired, and

in the derivation step, the deviation amount is derived by performing interpolation based on a difference between the posture information corresponding to the designated point and a parameter of a posture indicated by the information of the deviation amount associated with the vertex specified in the specifying step.

5. The control method according to claim 1, wherein

in the acquisition step, posture information corresponding to the designated point is further acquired, and

in the derivation step, an output obtained by inputting the coordinate information and the posture information of the designated point into a trained model is derived as a deviation amount from the designated point, the trained model being generated by performing learning with coordinate information of the vertex and posture information of the robot in the vertex as inputs and a deviation amount with respect to the vertex as an output.

6. The control method according to claim 1, further comprising:
an addition step of adding a new designated point in the movement path acquired in the acquisition step.

7. The control method according to claim 1, wherein
in the correction step, a target position of the robot with respect to the movement path in a case where the robot is operated along the movement path is corrected based on a deviation amount with respect to a plurality of the designated points provided in the movement path.

8. A control device of a robot including a welding torch at an arm tip end portion, the device comprising:

a holding unit configured to hold a database in which coordinates of a target position of the tip of the welding torch and a deviation amount of the tip of the welding torch from the target position are associated with each other;

an acquisition unit configured to acquire coordinate information of a designated point provided in a movement path of a tip end of the welding torch in a case where the robot is operated;

a specifying unit configured to specify information of a deviation amount associated with a vertex of a lattice including the designated point from the database;

a derivation unit configured to derive a deviation amount of the tip end of the welding torch from the designated point in a case where the robot is operated with the designated point as a target position based on the deviation amount specified by the specifying unit and coordinates of the designated point and the vertex; and

a correction unit configured to correct a target position of the robot with respect to the designated point based on the deviation amount derived by the derivation unit.

# FIG. 1

ROBOT CONTROLLER — 106
POWER SUPPLY — 107

## INFORMATION PROCESSING DEVICE (200)

| | |
|---|---|
| MANUFACTURING CONTROL UNIT (201) | SHAPE DATA ACQUISITION UNIT (205) |
| POWER SUPPLY CONTROL UNIT (202) | TEACHING DATA ACQUISITION UNIT (206) |
| FEEDING CONTROL UNIT (203) | CORRECTION AMOUNT CALCULATION UNIT (207) |
| DB MANAGEMENT UNIT (204) | PERIPHERAL DEVICE CONTROL UNIT (208) |

## FIG. 2A

# FIG. 2B

300

| x | y | z | α | β | γ | dx | dy | dz |
|---|---|---|---|---|---|----|----|----|
| $x_{111}$ | $y_{111}$ | $z_{111}$ | $\alpha_{111}$ | $\beta_{111}$ | $\gamma_{111.1}$ | $dx_{111.1}$ | $dy_{111.1}$ | $dz_{111.1}$ |
| $x_{111}$ | $y_{111}$ | $z_{111}$ | $\alpha_{111}$ | $\beta_{111}$ | $\gamma_{111.2}$ | $dx_{111.2}$ | $dy_{111.2}$ | $dz_{111.2}$ |
| $x_{110}$ | $y_{110}$ | $z_{110}$ | $\alpha_{110}$ | $\beta_{110}$ | $\gamma_{110}$ | $dx_{110}$ | $dy_{110}$ | $dz_{110}$ |
| ... | ... | ... | | | | | | |

# FIG. 3

# FIG. 4

```
                         ┌─────────────┐
                         │    START    │
                         └──────┬──────┘
                                │
          ┌─────────────────────▼─────────────────────┐
          │   ACQUIRE INFORMATION OF DESIGNATED        │── S401
          │   POINTS FROM DEPOSITION PLAN DATA         │
          └─────────────────────┬─────────────────────┘
                                │
          ┌─────────────────────▼─────────────────────┐
          │   FOCUS ON ONE DESIGNATED POINT FROM       │── S402
          │   AMONG UNPROCESSED DESIGNATED POINTS      │
          └─────────────────────┬─────────────────────┘
                                │
          ┌─────────────────────▼─────────────────────┐
          │   SPECIFY CLOSEST POINT TO DESIGNATED      │
          │   POINT OF INTEREST FROM ROBOT ERROR       │── S403
          │   MAP, AND ACQUIRE CORRECTION AMOUNT       │
          │   INFORMATION THEREOF                      │
          └─────────────────────┬─────────────────────┘
```

**S404** DISTANCE BETWEEN DESIGNATED POINT OF INTEREST AND SPECIFIED CLOSEST POINT LESS THAN THRESHOLD?

NO

**S406** SPECIFY MULTIPLE NEIGHBORING COORDINATE POINTS POSITIONED IN VICINITY OF DESIGNATED POINT OF INTEREST FROM ROBOT ERROR MAP, AND ACQUIRE PIECES OF CORRECTION AMOUNT INFORMATION OF NEIGHBORING COORDINATE POINTS

YES

**S405** SET CORRECTION AMOUNT INFORMATION OF CLOSEST POINT AS CORRECTION AMOUNT FOR DESIGNATED POINT OF INTEREST

**S407** DERIVE CORRECTION AMOUNT FOR DESIGNATED POINT OF INTEREST BASED ON CORRECTION AMOUNT INFORMATION OF MULTIPLE NEIGHBORING COORDINATE POINTS

**S408** CORRECT COORDINATES OF DESIGNATED POINT OF INTEREST BASED ON CORRECTION AMOUNT

**S409** ANY UNPROCESSED DESIGNATED POINT?

YES

NO

END

## FIG. 5A

POSTURE NUMBER

···O··· EXAMPLE　　—●— ESTIMATED VALUE

## FIG. 5B

POSTURE NUMBER

···O··· EXAMPLE　　—●— ESTIMATED VALUE

# FIG. 5C

DEVIATION AMOUNT [mm]

POSTURE NUMBER

$(\alpha, \beta, \gamma)$ CHANGE INDEPENDENTLY    $(\alpha, \beta, \gamma)$ CHANGE TOGETHER

---○--- EXAMPLE    ——●—— ESTIMATED VALUE

# FIG. 6A

| | |
|---|---|
| 0.4-0.5 |
| 0.3-0.4 |
| 0.2-0.3 |
| 0.1-0.2 |
| 0-0.1 |

# FIG. 6B

# FIG. 7

## FIG. 8

β ANGLE [deg]

## FIG. 9A

## FIG. 9B

## INTERNATIONAL SEARCH REPORT

| International application No. |
|---|
| **PCT/JP2023/018003** |

**A. CLASSIFICATION OF SUBJECT MATTER**

*B23K 9/127*(2006.01)i; *B25J 9/10*(2006.01)i
FI:   B23K9/127 509E; B25J9/10 A

According to International Patent Classification (IPC) or to both national classification and IPC

**B. FIELDS SEARCHED**

Minimum documentation searched (classification system followed by classification symbols)

B23K9/127; B25J9/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-279461 A (MITSUBISHI HEAVY INDUSTRIES, LTD.) 20 November 2008 (2008-11-20) paragraphs [0027]-[0038], fig. 1 | 1-5, 7-8 |
| A | | 6 |
| Y | JP 9-237112 A (TOYODA KOKI KABUSHIKI KAISHA) 09 September 1997 (1997-09-09) paragraphs [0003], [0026]-[0052] | 1-5, 7-8 |
| A | | 6 |
| Y | JP 11-142139 A (KAWASAKI JUKOGYO KABUSHIKI KAISHA) 28 May 1999 (1999-05-28) paragraphs [0076]-[0082] | 2, 4 |
| A | | 1, 3, 5-8 |
| A | JP 61-133409 A (NACHI-FUJIKOSHI CORP.) 20 June 1986 (1986-06-20) entire text, all drawings | 1-8 |
| A | JP 8-57647 A (FANUC CORP.) 05 March 1996 (1996-03-05) entire text, all drawings | 1-8 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/018003**

| Patent document cited in search report | | | Publication date (day/month/year) | Patent family member(s) | Publication date (day/month/year) |
|---|---|---|---|---|---|
| JP | 2008-279461 | A | 20 November 2008 | (Family: none) | |
| JP | 9-237112 | A | 09 September 1997 | (Family: none) | |
| JP | 11-142139 | A | 28 May 1999 | (Family: none) | |
| JP | 61-133409 | A | 20 June 1986 | (Family: none) | |
| JP | 8-57647 | A | 05 March 1996 | US 5624588 A<br>entire text, all drawings | |

Form PCT/ISA/210 (patent family annex) (January 2015)

**EP 4 541 498 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61133409 A

- JP 2022114754 A